# EUROPÄISCHE PATENTSCHRIFT

(11) **EP 3 739 283 B1**
(45) Veröffentlichungstag und Bekanntmachung des Hinweises auf die Patenterteilung: **23.02.2022**
(21) Anmeldenummer: 19175219.5
(22) Anmeldetag: 17.05.2019
(51) Int. Cl.: C03C 3/06, F27B 7/02, C03B 19/10, C03C 1/02, F27B 7/18, F27B 7/36

(54) **VERFAHREN ZUR BEHANDLUNG RIESELFÄHIGER ANORGANISCHER KÖRNUNG SOWIE ZUR DURCHFÜHRUNG DES VERFAHRENS GEEIGNETES DREHROHR**
METHOD FOR TREATING FREE-FLOWING INORGANIC GRANULATION AND ROTATING PIPE FOR CARRYING OUT THE METHOD
PROCÉDÉ DE TRAITEMENT DU GRAIN COULANT INORGANIQUE AINSI QUE TUBE ROTATIF PERMETTANT LA MISE EN OEUVRE DUDIT PROCÉDÉ

(43) Veröffentlichungstag der Anmeldung: 18.11.2020
(73) Patentinhaber: Heraeus Quarzglas GmbH & Co. KG, 63450 Hanau (DE)
(72) Erfinder: Söhn, Matthias, 63450 Hanau (DE)
(74) Vertreter: Staudt, Armin Walter

(56) Entgegenhaltungen:
- WO-A1-2017/062949
- WO-A1-2018/084134
- CN-A- 109 269 294

## Beschreibung

### Technisches Gebiet

Die vorliegende Erfindung betrifft ein Verfahren zur Behandlung rieselfähiger anorganischer Körnung in einem beheizten, um eine Rotationsachse rotierenden Drehrohr, das einen Behandlungsraum umgibt, der mittels Trennelementen in mehrere Behandlungszonen, davon mindestens eine Reaktionszone, unterteilt ist, wobei die Körnung an einer Körnungseinlassseite dem Behandlungsraum zugeführt und in einer Körnungs-Transportrichtung zu einer Körnungsauslassseite transportiert und dabei einem Behandlungsgas ausgesetzt wird.

Außerdem betrifft die Erfindung ein Drehrohr zur Behandlung rieselfähiger anorganischer Körnung, das um eine zur Horizontalen geneigte Rotationsachse rotierbar ist, und das einen Behandlungsraum zur Aufnahme der Körnung umgibt, der mittels Trennelementen in mehrere Behandlungszonen, davon mindestens eine Reaktionszone, unterteilt ist, und der eine Körnungseinlassseite zum Einführen der Körnung in den Behandlungsraum und eine Körnungsauslassseite zum Austragen der Körnung aus dem Behandlungsraum sowie einen Gaseinlass zum Einleiten eines Behandlungsgases in die Reaktionszone und einen Gasauslass zur Ausleitung von verbrauchtem Behandlungsgas aus dem Behandlungsraum ausweist.

Derartige Behandlungsverfahren unter Einsatz eines Drehrohr-Ofens werden beispielsweise zum Reinigen amorpher oder kristalliner Körnung, insbesondere aus SiO₂ eingesetzt.

### Stand der Technik

SiO₂-Körnungen werden als Rohstoff für die Herstellung von Quarzglas eingesetzt. Bei vielen Anwendungen von Quarzglas, beispielsweise als Bauteil zum Einsatz bei der Halbleiterherstellung oder für die Optik, werden an die Reinheit hohe Anforderungen gestellt, die nur unter großem Zeit-, Material- und Kostenaufwand zu erreichen sind. Durch Behandlung unter chlorhaltiger Atmosphäre bei hoher Temperatur (Thermochlorierung) werden Verunreinigungen wie Eisen, Titan, Alkali- und Erdalkalimetallen entfernt. Ein derartiges Verfahren zur kontinuierlichen Reinigung von Quarzpulver durch Thermochlorierung in einem Drehrohrofen ist in der US 5,637,284 A beschrieben. Das zu reinigende Quarzpulver wird kontinuierlich einer Einlassseite eines schräg gestellten und elektrisch beheizten Drehrohrs aus Quarzglas zugeführt und durchläuft darin nacheinander eine Vorheizkammer, eine Reaktionskammer und eine Gas-Desorptionskammer. Die jeweiligen Kammern sind mittels durchlässiger Trennelemente, die auch zur Durchmischung des Quarzpulvers dienen, voneinander separiert. In der Vorheizkammer wird das Quarzpulver auf etwa 800 °C erwärmt, bevor es in der Reaktionskammer bei einer Temperatur um 1300 °C mit einem Gasgemisch aus Chlor und Chlorwasserstoff behandelt wird. Dieses Gasgemisch wird mittels eines in der Drehrohr-Längsachse verlaufenden Gaslanze von der Auslassseite her in die Reaktionskammer eingeleitet. Das Gasgemisch reagiert mit Verunreinigungen des Quarzpulvers unter Bildung gasförmiger Metallchloride. In der Desorptionskammer werden das verbrauchte Gasgemisch und die gasförmigen Reaktionsprodukte abgesaugt. Dafür dient eine weitere Gaslanze, die von der Auslassseite aus in die Desorptionskammer hineinragt.

Die feststehende Lanze zum Zuführen des Behandlungsgases verformt sich bei hoher Temperatur von beispielsweise 1200°C. Dadurch tritt das Behandlungsgas an wechselnden Stellen mit der SiO₂-Körnung in Kontakt, wodurch die Reproduzierbarkeit der Reinigungsergebnisse leidet. Infolge der stirnseitig offenen Enden und der großen Querschnittsfläche des Drehrohres strahlt der Ofen viel Wärme an den Stirnseiten ab. Der Einsatz von dichten Drehdurchführungen am heißen Ende des Drehrohres ist aufgrund der hohen Temperatur nicht möglich.

Bei dem aus der WO 2010/037473 A1 bekannten kontinuierlichen Reinigungsverfahren für SiO₂-Körnung in einem Drehrohrofen sind im Drehrohr-Innenraum Einbauten wie Schaufeln oder Noppen montiert, die zum Transport und zur Durchmischung der zu reinigenden Körnung dienen.

Die US 7,837,955 B2 beschreibt ein kontinuierliches Reinigungsverfahren für Quarzsand in einem Drehrohrofen, bei dem im Drehrohr vertikale Trennplatten eingelassen sind, wobei der Quarzsand zwischen dem äußeren Rand der Trennwand und der Drehrohr-Innenwandung hindurch geleitet wird. Der Quarzsand wird dabei vom dem einen Ende und das Behandlungsgas wird vom anderen Ende in das Drehrohr eingeführt. Der Innendruck innerhalb des Drehrohres kann höher sein als der außen anliegende Druck (Atmosphärendruck).

Die WO 88/03914 A1 lehrt die Reduktion der BET-Oberfläche eines amorphen, porösen SiO₂-Pulvers unter Einsatz eines Drehrohrofens in einer Helium und/oder Wasserstoff enthaltender Atmosphäre. Bei einer Verfahrensweise wird feiner SiO₂-Sootstaub mit Wasser vermischt, so dass eine feuchte krümelige Masse erhalten wird. Diese Masse wird in einen Drehrohrofen gegeben und bei einer Temperatur von 600 °C zu einem Pulver mit Korngrößen von 0,1 bis 3 mm verdichtet.

Die DE 10 2010 021 693 A1 beschreibt ein kontinuierliches Verglasen eines porösen SiO₂-Granulats zu einer transparenten, synthetischen Quarzglaskörnung. Dabei wird eine Schüttung des Granulats in einem Drehrohrofen mit einem um seine Mittelachse rotierenden Drehrohr und mit einer Innenwandung aus Quarzglas von einem Laserstrahl erhitzt. Durch Erzeugen einer Relativbewegung zwischen Schüttung und Laserstrahl wird ein gleichmäßiges Verglasen der Granulatteilchen ohne Agglomerierung erzielt.

Die WO 2017/062949 A1 beschreibt ein System zum Entgasen von körnigem Polysilizium in einem Drehrohrofen mit einem um eine Rotationsachse rotierenden Drehrohr, das einen Behandlungsraum mit mehreren sequentiellen Behandlungszonen umgibt. Die Aufteilung in Behandlungszonen erfolgt durch Rührelemente, die an einem in das Drehrohr hineinragenden Schaft befestigt sind und bis nahe an die Drehrohr-Innenwandung ragen. Die zu behandelnde Polysilicium-Körnung gelangt von einer Körnungseinlas-Öffnung durch Übergabeöffnungen der Rührelemente zu einer Körnungsauslass-Öffnung und wird dabei einem Spülgas ausgesetzt.

Die WO 2018/084134 A1 beschreibt ein Verfahren zum Entwässern von partikelförmigem Lithiumhydroxidhydrat in einem Drehrohrofen. Die Lithiumhydroxidhydrat-Partikel werden an einer Seite des Drehrohres eingeführt, einer Heizzone zugeführt und dort einem inerten Trocknungsgas ausgesetzt, das auf eine Temperatur unterhalb von 100 °C erwärmt wird. Das Trocknungsgas wird über ein Gaseinleitungsrohr eingeleitet und am anderen Ende des Drehrohrs wird getrocknetes Lithiumhydroxid-Anhydrid abgezogen. Von dieser Seite ragt ein Gasabsaugrohr in die Reaktionszone, mittels dem verbrauchtes, heißes Trocknungsgas aus der Heizzone abgezogen wird. Das direkte Einleiten des erwärmten Trocknungsgases in die Heizzone vermeidet eine Kondensation des wasserdampfhaltigen Gases, das auch nicht zurückströmen kann. Dadurch kann verhindert werden, dass Lithiumhydroxid am Drehrohr anhaften und verbleiben kann.

Aus der CN 109 269 294 ist ein luftdichter Drehrohrofen mit gleichseitiger Beschickung und Entleerung bekannt. Der Drehrohrofen besteht aus einem Ofenrohr, drei an der Ofenrohr-Außenwand angeordneten Mänteln und einem Stützlager. Über Rohrbündel, die axial entlang des Ofens verteilt sind, wird das Behandlungsgut indirekt beheizt. Das Abgas wird über Gaskanäle außerhalb des Ofens abgeführt.

### Technische Aufgabenstellung

Der Grad der Einwirkung des Behandlungsgases auf die Körnung in einem Drehrohrofen hängt von der Einwirkungsdauer und der Temperatur ab. Insbesondere hängt beispielsweise der Reinigungseffekt der Thermochlorierung von der Reaktionsdauer der SiO₂-Körnung mit dem chlorhaltigen Gasgemisch und von der Reaktionstemperatur ab.

Bei höheren Temperaturen reagiert Chlor schneller mit den metallischen Verunreinigungen ab, so dass mit steigender Temperatur ein besserer Reinigungseffekt zu erwarten wäre. Allerdings ist die Möglichkeit der Temperaturerhöhung aus mehreren Gründen limitiert, unter anderem deswegen, da sich bei hohen Temperaturen aufgrund des Erweichens der SiO₂-Körnung Agglomerate bilden, die den weiteren Zutritt des Behandlungsgases zur Oberfläche der einzelnen Körner erschweren. Der Reinigungseffekt durch das Behandlungsgas, das in erster Linie an der Oberfläche der Körnung wirkt, wird dadurch verringert.

Die mittlere Verweilzeit eines Partikels ist abhängig von der Füllmenge des Drehrohrs: je höher die Füllmenge, desto länger die Kontaktzeit mit dem Reaktivgas und desto besser damit das Reinigungsergebnis. Umgekehrt, ermöglicht eine vergleichsweise größere Füllmenge bei gleicher Verweilzeit einen höheren Durchsatz. Eine längere Verweilzeit kann auch durch verringerte Drehzahl des Rohrs erreicht werden. Damit wird aber auch die Umwälzung des Inhalts vermindert und somit der Kontakt mit dem Reaktionsgas.

Durch einen hohen Falschluftanteil im Behandlungsgas können unkontrollierte und unerwünschte Nebenreaktionen stattfinden. Durch undefinierte und uneffektive Strömungspfade bleibt ein Großteil des Behandlungsgases ungenutzt und muss durch Neutralisation aufwändig entsorgt werden.

Gelöste Verunreinigungen kondensieren an kalten Bereichen des Drehrohrs und lagern sich mit der Zeit als Feststoff ab. Fallen die Ablagerungen in die zu behandelnde SiO₂-Körnung, erzeugen sie Fehler oder Ausschuss in nachfolgenden Weiterverarbeitungsprozessen, wie etwa beim Einschmelzen der Körnung zur Herstellung von Quarzglas.

Der Erfindung liegt daher die Aufgabe zugrunde, ein Verfahren anzugeben, das eine thermische Behandlung anorganischer rieselfähiger Körnung, insbesondere von SiO₂-Körnung im Drehrohrofen, insbesondere die Aufreinigung durch Thermochlorierung, bei geringem und effektivem Verbrauch von Behandlungsgas zuverlässig und reproduzierbar ermöglicht.

Weiterhin liegt der Erfindung die Aufgabe zugrunde, ein zur Durchführung des Verfahrens geeignetes, möglichst zuverlässiges Drehrohr zum Einsatz in einem Drehrohrofen bereitzustellen.

### Zusammenfassung der Erfindung

Hinsichtlich des Verfahrens wird diese Aufgabe ausgehend von einem Verfahren der eingangs genannten Gattung erfindungsgemäß dadurch gelöst, dass verbrauchtes Behandlungsgas aus der Reaktionszone mittels eines um seine Längsachse rotierenden Gasverteilerrohres abgesaugt wird.

Der von der Drehrohr-Innenbohrung definierte Behandlungsraum ist mit Hilfe von Trennelementen, wie beispielsweise mittels Quarzglasscheiben, in mehrere Zonen (auch als "Kammern" bezeichnet) unterteilt. Die Zonen sind für unterschiedliche Funktionen ausgelegt, wie etwa zum Vorheizen oder Abkühlen der Körnung vor beziehungsweise nach einer eigentlichen Hochtemperatur-Behandlung, die überwiegend in der Reaktionszone stattfindet.

Bei der thermischen Behandlung ist eine möglichst gleichmäßige Einwirkung des Behandlungsgases auf die Körnung erwünscht. Die Behandlung dient beispielsweise zum Reinigen der anorganischen Körnung, insbesondere von SiO₂-Körnung, wobei in dem Fall das Behandlungsgas halogenhaltige Substanzen enthalten kann.

Das erfindungsgemäße Verfahren zielt darauf ab, dass Abgas, also verbrauchtes, verunreinigtes Behandlungsgas, möglichst wenig mit der zu behandelnden Körnung in Kontakt kommt. Dazu wird verbrauchtes Behandlungsgas aus der Reaktionszone mittels eines um sine Rohr-Längsachse rotierenden Gasverteilerrohres abgesaugt, das an einem "Absaug-Ende" des Drehrohrs endet. Dadurch ergeben sich mehrere Vorteile:
- Das im Gasverteilerrohr geführte und verbrauchte Behandlungsgas ist von der Körnung separiert. Insoweit schafft das Gasverteilerrohr für das verbrauchte Behandlungsgas einen von der zu behandelnden Körnung getrennten Materialtransportpfad.
- Der im Vergleich zum Drehrohr-Innendurchmesser kleinere Querschnitt des Gasverteilerrohres ermöglicht ein effektives Absaugen von mindestens einem Teil des verbrauchten Behandlungsgases aus der Reaktionszone.

Durch effektives Entfernen von verbrauchtem und mit Verunreinigungen beladenem Behandlungsgas aus dem Behandlungsraum werden Kondensationen an kalten Stellen im Behandlungsraum und Ablagerungen und die damit einhergehenden Störungen und Verunreinigungen der Körnung unterdrückt.
- Die Rotationsachse des Drehrohres und die Rohr-Längsachse des Gasverteilerrohres verlaufen im einfachsten und bevorzugten Fall koaxial. Dadurch, dass das Gasverteilerrohr - vorzugsweise in der Rotationsachse des Drehrohres - rotiert, wird eine Verformung aufgrund hoher Temperatur vermieden. Die Effektivität der Absaugung von verbrauchtem Behandlungsgas aus der Reaktionszone ist daher reproduzierbar und beispielsweise zeitlich weitgehend konstant.

Verbrauchtes Behandlungsgas wird vorteilhafterweise aus dem Gasverteilerrohr mittels eines rotatorisch feststehenden Absaugrohres abgesaugt.

Das Absaugrohr ist mit dem Gasverteilerrohr nicht verbunden. Es ragt beispielsweise in das Gasverteilerrohr hinein oder es schließt möglichst dicht aber kontaktlos an das Gasverteilerrohr an. Das Abgas des Drehrohrofens kann sehr heiß sein, was die Realisierung einer dichten Drehdurchführung für die Ausleitung des heißen Behandlungsgases an dieser Stelle erschwert. Dadurch, dass das Absaugrohr mit dem rotierenden Gasverteilerrohr keine feste mechanische Verbindung hat, kann ein feststehendes Absaugrohr eingesetzt und daher auf eine Drehdurchführung verzichtet werden. Das Absaugrohr steht am Ende des Materialtransportpfades für das Behandlungsgas. Es kann zusätzlich gekühlt werden, indem Fremdluft von außerhalb des Gasverteilerrohres zusätzlich eingesaugt wird. Das abgesaugte Behandlungsgas und die dabei abgesaugte Fremdluft kommen nicht mehr mit der zu behandelnden Körnung in Kontakt.

Bei einer besonders bevorzugten Verfahrensweise wird ein Absaugrohr eingesetzt, das in das Gasverteilerrohr hineinragt.

In Richtung auf das "Absaug-Ende" nehmen die Temperaturen innerhalb des Drehrohrs und des Behandlungsgases ab. Das in das Gasverteilerrohr hineinragende Ende des Absaugrohres kann an eine Position innerhalb des Drehrohrs verschoben werden, bei der noch eine Temperatur oberhalb der Kondensationstemperatur herrscht. Da die Temperatur an der effektiven Absaugposition höher ist als die Kondensationstemperatur findet beim Abkühlen des verbrauchten Behandlungsgases Kondensation innerhalb des Absaugrohres statt. Die sich dort bildenden Ablagerungen können nicht in die Körnung gelangen. Das Absaugrohr wird infolge der Ablagerungen von Zeit zu Zeit ausgetauscht.

Das Behandlungsgas wird vorzugsweise an der Körnungsauslassseite in das Gasverteilerrohr eingeleitet und entgegen der Körnungs-Transportrichtung von einer Kammer zur nächsten Kammer geleitet, wobei es durch mindestens eine Gasauslassöffnung aus dem Gasverteilerrohr in die Reaktionszone austritt, und verbrauchtes Behandlungsgas durch mindestens eine Gaseinlassöffnung aus der Reaktionszone in das Gasverteilerrohr wieder eintritt.

Durch die Einleitung des Behandlungsgases in den Behandlungsraum im Gegenstrom zur Transportrichtung der Körnung wird gewährleistet, dass die weitgehend fertig behandelte, beispielsweise weitgehend gereinigte SiO₂-Körnung, nur mit frischem, wenig belastetem Behandlungsgas in Kontakt kommt.

Das Gasverteilerrohr erlaubt eine definierte und zielgenaue Einleitung des Behandlungsgases mit vergleichsweise wenig Falschluft in die Reaktionszone. Undefinierte und uneffektive Strömungspfade werden weitgehend vermieden. Die mit der Falschlufteinleitung eingetragenen und durch Reaktion erzeugten Verunreinigungen werden verringert. Die effektive Nutzung des Behandlungsgases verringert die Material- und Entsorgungskosten.

Durch die Rotation des Gasverteilerrohres um seine Längsachse, vorzugsweise um die Drehrohr-Rotationsachse, wird eine Verformung auch im Bereich der Einleitung des Behandlungsgases in den Behandlungsraum vermieden, so dass sich die Position der Gaseinleitung in die Reaktionszone und der Einwirkung des Behandlungsgases auf die Körnung zeitlich konstant ist und eine reproduzierbare Wechselwirkung zwischen dem Behandlungsgas und der Körnung gewährleistet ist.

Die mindestens eine Gasauslassöffnung befindet sich dabei - in Strömungsrichtung des Behandlungsgases gesehen - möglichst am Anfang der Reaktionszone, und die mindestens eine Gaseinlassöffnung befindet sich möglichst am Ende der Reaktionszone.

Die Gasauslassöffnung kann als vordere Wandungsöffnung des Gasverteilerrohres, und die Gaseinlassöffnung kann als hintere Wandungsöffnung des Gasverteilerrohres ausgeführt sein, wobei in dem Fall das Gasverteilerrohr über seine Länge zwischen der vorderen und der hinteren Wandungsöffnung mindestens teilweise, vorzugsweise vollständig verschlossen ist. In diesem Fall kann ein Gasverteilerrohr eingesetzt werden, das sich durch den gesamten Behandlungsraum erstreckt und dessen Längsachse koaxial zur Drehrohr-Rotationsachse verläuft.

Im Hinblick auf eine möglichst effektive erzwungene Durchströmung der anorganischen Körnung mit frischen Behandlungsgas in der Reaktionszone ist es vor-teilhaft, wenn die vordere Wandungsöffnung und die hintere Wandungsöffnung auf unterschiedlichen Umfangswinkeln der Gasverteilerrohr-Mantelfläche liegen, vorzugsweise auf entgegengesetzten Umfangseiten

Ein möglichst vollständiger Austritt des Behandlungsgases aus dem Gasverteilerrohr kann aber auch gewährleistet werden, wenn das Gasverteilerrohr aus getrennten Rohrstücken zusammengesetzt ist, wobei das - in Strömungsrichtung des Behandlungsgases gesehen - vordere Rohrstück am vorderen Trennelement endet oder sich allenfalls von dort ein kurzes Stück in die Reaktionszone erstreckt, und das hintere Rohrstück am hinteren Trennelement endet oder sich allenfalls von dort ein kurzes Stück in die Reaktionszone erstreckt. In dem Fall sind die Gasauslass- und Gaseinlassöffnungen grundsätzlich auch als stirnseitige Rohröffnungen ausführbar, vorzugsweise sind es aber Öffnungen in der Rohrwandung des Rohrstücks, um ein Umleiten des Behandlungsgases aus der zentralen Achse der Reaktionskammer in Richtung auf die Körnung zu erzwingen.

Das Behandlungsgas wird über die Gaseinlassöffnung aus dem Gasverteilerrohr in die Reaktionskammer eingeleitet, und über die Gaseinlassöffnung wird mindestens ein Teil des Behandlungsgases wieder in das Gasverteilerrohr eingesaugt und im Gasverteilerrohr weitergeleitet. Dazu trägt auch ein Druckgradient mit einem niedrigeren Druck in der Gasphase der Drehrohr-Innenbohrung am Absaug-Ende des Drehrohres bei. Der Druckgradient stellt sich entweder infolge der einseitigen Absaugung des verbrauchten Behandlungsgases am "Absaug-Ende"
oder infolge einer beidseitigen Absaugung am Drehrohr aber mit höherer Saugleistung am "Absaug-Ende" automatisch ein, und er bewirkt einen Transport des Behandlungsgases und von verbrauchtem Behandlungsgas in Richtung auf das Absaug-Ende des Drehrohrs.

Vorzugsweise ist das Gasverteilerrohr mit mindestens einem Trennelement drehfest verbunden, und die Trennelemente weisen zum Durchlass von Körnung von einer Zone zur nächsten Zone jeweils eine Übergabeöffnung auf.

Die Trennelemente sind mit dem Drehrohr fest verbunden und drehen sich mit diesem. Dadurch, dass das Gasverteilerrohr mit mindestens einem der Trennelemente, vorzugsweise mit allen Trennelementen, fest verbunden ist, dreht es sich synchron mit dem Drehrohr, ohne dass dafür ein separater Antrieb benötigt wird. Die Übergabeöffnungen bilden Durchgänge zwischen jeweils zwei benachbarten Behandlungszonen und stellen einen durchgehenden Transportpfad für die Körnung sicher. Jedes Trennelement kann über eine Übergabeöffnung oder über mehrere Übergabeöffnungen verfügen. Für die Position der Übergabeöffnung am Trennelement beziehungsweise für die Positionen und die Verteilung mehrerer Übergabeöffnungen am Trennelement gibt es keine Festlegung..

Die Trennelemente sind dabei vorzugsweise mit mindestens einem Körnungs-Mitnehmer ausgestattet, der infolge der Drehrohr-Rotation in die Körnung eintaucht und dabei mitgenommene Körnung zur Übergabeöffnung verfrachtet.

Der Körnungs-Mitnehmer befindet sich auf derjenigen Seite des Trennelements, die der fließenden Körnung zugewandt ist. Infolge der Drehrohr-Rotation schaufelt der Körnungs-Mitnehmer die Körnung durch die Übergabeöffnung von der einen Behandlungszone in die benachbarte Behandlungszone. Er ist beispielsweise als Rohrhalbschale oder Rutsche ausgebildet, die an der Übergabeöffnung endet.

Die mit die mit derartigen Körnungs-Mitnehmern ausgestatteten Trennelemente dienen nicht nur zur Unterteilung des Behandlungsraums in mehrere Zonen, sondern die bewirken oder erleichtern infolge der Rotation des Drehrohrs um seine Rotationsachse außerdem den Transport der Körnung von der einen Behandlungszone in die nächste Behandlungszone.

Bei einer bevorzugten Ausführungsform des erfindungsgemäßen Verfahrens dienen die mit derartigen Körnungs-Mitnehmern ausgestatteten Trennelemente auch zur Steuerung des Körnungs-Durchsatzes. Denn bei einer gegenläufigen Rotation des Drehrohres wirken die Körnungs-Mitnehmer nicht als Schaufel für die SiO₂-Körnung, sondern im Gegenteil, sie schieben die Körnung von der Übergabeöffnung weg, so dass der weitere Körnungstransport angehalten werden kann.

In Körnungs-Transportrichtung gesehen ist der Körnungseinlassseite ein vorderes Trennelement nachgeordnet und der Körnungsauslassseite ein hinteres Trennelement vorgeordnet, wobei es sich als vorteilhaft erweisen hat, wenn das vordere und/oder das hintere Trennelement aus opakem Quarzglas ausgeführt sind.

Das opake Quarzglas reflektiert Wärmestrahlung aus dem Behandlungsraum und schirmt die Körnungseinlass- und/oder -auslassseite dadurch vor der Hitze der Reaktionszone ab. Das hintere Trennelements aus opakem Quarzglas schirmt beispielsweise die Körnungsauslassseite (gleichbedeutend mit der Einleitungsseite für das Behandlungsgas) vor Wärme ab und ermöglicht dadurch eine Drehdurchführung für das rotierende Gasverteilerrohr in den Behandlungsraum.

Im Hinblick auf eine effektive Wärmeabschirmung hat eine Verfahrensvariante Vorteile, bei der das Drehrohr nicht beheizte stirnseitige Endabschnitte aufweist, wobei das vordere und das hintere Trennelement jeweils in einem nicht beheizten stirnseitigen Endabschnitt angeordnet sind.

In dem Zusammenhang hat es sich außerdem als vorteilhaft erwiesen, wenn das Gasverteilerrohr einen an der Körnungsauslassseite aus dem Drehrohr herausragenden Längenabschnitt aufweist, und dass mindestens dieser Längenabschnitt aus opakem Quarzglas ausgeführt ist.

Der Längenabschnitt aus opakem Quarzglas reflektiert Wärmestrahlung und vermindert die Leitung in der Wandung des Gasverteilerrohres zum stirnseitigen Ende an der Körnungsauslassseite. Dies trägt dazu bei, dass das rotierende Gasverteilerrohr in den Behandlungsraum über eine Drehdurchführung geführt und dadurch das Behandlungsgas ohne jede Fremdluft in den Behandlungsraum eingeführt werden kann.

Hinsichtlich des Drehrohrs wird die oben angegebene Aufgabe ausgehend von einem Drehrohr der eingangs genannten Gattung erfindungsgemäß dadurch gelöst, dass der Gasauslass ein um seine Längsachse rotierendes Gasverteilerrohr umfasst.

Der von der Drehrohr-Innenbohrung definierte Behandlungsraum ist mit Hilfe von Trennelementen, wie beispielsweise mittels Quarzglasscheiben, in mehrere Zonen (auch als "Kammern" bezeichnet) unterteilt. Die Zonen sind für unterschiedliche Funktionen ausgelegt, wie etwa zum Vorheizen oder Abkühlen der Körnung vor beziehungsweise nach einer eigentlichen Hochtemperatur-Behandlung, die überwiegend in der Reaktionszone stattfindet.

Um verbrauchtes Behandlungsgas aus der Reaktionszone abzusaugen, verfügt das erfindungsgemäße Drehrohr über ein um seine Rohr-Längsachse rotierbares Gasverteilerrohr, das an einem "Absaug-Ende" des Drehrohrs endet. Dadurch ergeben sich mehrere Vorteile:
- Das im Gasverteilerrohr geführte und verbrauchte Behandlungsgas ist von der Körnung separiert. Insoweit schafft das Gasverteilerrohr für das verbrauchte Behandlungsgas einen von der zu behandelnden Körnung getrennten Materialpfad.
- Der im Vergleich zum Drehrohr-Innendurchmesser kleinere Querschnitt des Gasverteilerrohres ermöglicht ein effektives Absaugen von mindestens einem Teil des verbrauchten Behandlungsgases aus der Reaktionszone.

Durch effektives Entfernen von verbrauchtem und mit Verunreinigungen beladenem Behandlungsgas aus dem Behandlungsraum werden Kondensationen an kalten Stellen im Behandlungsraum und Ablagerungen und die damit einhergehenden Störungen und Verunreinigungen der Körnung unterdrückt.
- Die Rotationsachse des Drehrohres und die Rohr-Längsachse des Gasverteilerrohres verlaufen im einfachsten und bevorzugten Fall koaxial. Dadurch, dass das Gasverteilerrohr vorzugsweise in der Rotationsachse des Drehrohres rotiert werden kann, kann eine Verformung aufgrund hoher Temperatur vermieden werden. Die Effektivität der Absaugung von verbrauchtem Behandlungsgas aus der Reaktionszone ist daher reproduzierbar und beispielsweise zeitlich weitgehend konstant.

Der Gasauslass umfasst vorteilhafterweise ein Absaugrohr, das kontaktlos in das Gasverteilerrohr hineinragt oder ohne direkten Kontakt an das Gasverteilerrohr anschließt. Das Absaugrohr dient zur Absaugung von verbrauchtem Behandlungsgas aus dem Gasverteilerrohr.

Das Absaugrohr ist mit dem Gasverteilerrohr nicht fest verbunden; es ragt beispielsweise in das Gasverteilerrohr hinein oder es schließt möglichst dicht aber kontaktlos an das Gasverteilerrohr an. Dadurch, dass das Absaugrohr mit dem um die Rohr-Längsachse rotierenden Gasverteilerrohr keinen mechanischen Kontakt hat, kann ein rotatorisch feststehendes Absaugrohr eingesetzt und daher auf eine Drehdurchführung verzichtet werden.

Die nachfolgend genannten vorteilhaften Ausführungsformen des erfindungsgemäßen Drehrohres entsprechen Maßnahmen des erfindungsgemäßen Verfahrens. Dazu wird auf die obigen Erläuterungen zu den jeweiligen Verfahrensmaßnahmen verwiesen.

Vorzugsweise ist der Gaseinlass an einem Gaseinlassende des Gasverteilerrohres vorgesehen, der am Körnungsauslassende des Drehrohres liegt.

Vorteilhafterweise weist das Gasverteilerrohr mindestens eine Gasauslassöffnung zur Ausleitung von Behandlungsgas aus dem Gasverteilerrohr in die Reaktionszone und mindestens eine Gaseinlassöffnung zur Einleitung von Behandlungsgas aus der Reaktionszone in das Gasverteilerrohr auf, wobei die Gasverteilerrohr-Innenbohrung vorzugsweise zwischen der Gasauslassöffnung und der Gaseinlassöffnung mindestens teilweise verschlossen ist.

Es hat sich bewährt, wenn das Gasverteilerrohr mit mindestens einem Trennelement drehfest verbunden ist, wobei die Trennelemente zum Durchlass von Körnung jeweils eine Übergabeöffnung aufweisen, durch die hindurch sich das Gasverteilerrohr erstreckt, und dass die Trennelemente mit einem Körnungs-Mitnehmer ausgestattet sind, der dazu ausgelegt ist, infolge der Drehrohr-Rotation in die Körnung einzutauchen und dabei mitgenommene Körnung zur Übergabeöffnung zu verfrachten.

Weiterhin hat es sich bewährt, wenn in Körnungs-Transportrichtung gesehen der Körnungseinlassseite ein vorderes Trennelement nachgeordnet ist und der Körnungsauslassseite ein hinteres Trennelement vorgeordnet ist, wobei das vordere und/oder das hintere Trennelement aus opakem Quarzglas ausgeführt sind.

In dem Zusammenhang hat es sich auch als günstig erwiesen, wenn das Drehrohr nicht beheizte stirnseitige Endabschnitte aufweist, wobei das vordere und das hintere Trennelement jeweils in einem nicht beheizten stirnseitigen Endabschnitt angeordnet sind.

Bei einer bevorzugten Ausführungsform des Drehrohrs weist das Gasverteilerrohr einen am Körnungsauslass aus dem Drehrohr herausragenden Längenabschnitt auf, wobei mindestens dieser Längenabschnitt aus opakem Quarzglas ausgeführt ist.

### Ausführungsbeispiel

Nachfolgend wird die Erfindung anhand eines Ausführungsbeispiels und einer Zeichnung näher erläutert. Im Einzelnen zeigt in schematischer Darstellung
- **Figur 1**: einen Drehrohrofen mit einem von einem Drehrohr aus Quarzglas gemäß der Erfindung gebildeten Behandlungsraum in einer dreidimensionalen Ansicht, und
- **Figur 2**: ein Trennelement zum Aufteilen des Behandlungsraums in einer gegenüber Figur 1 vergrößerten Darstellung.

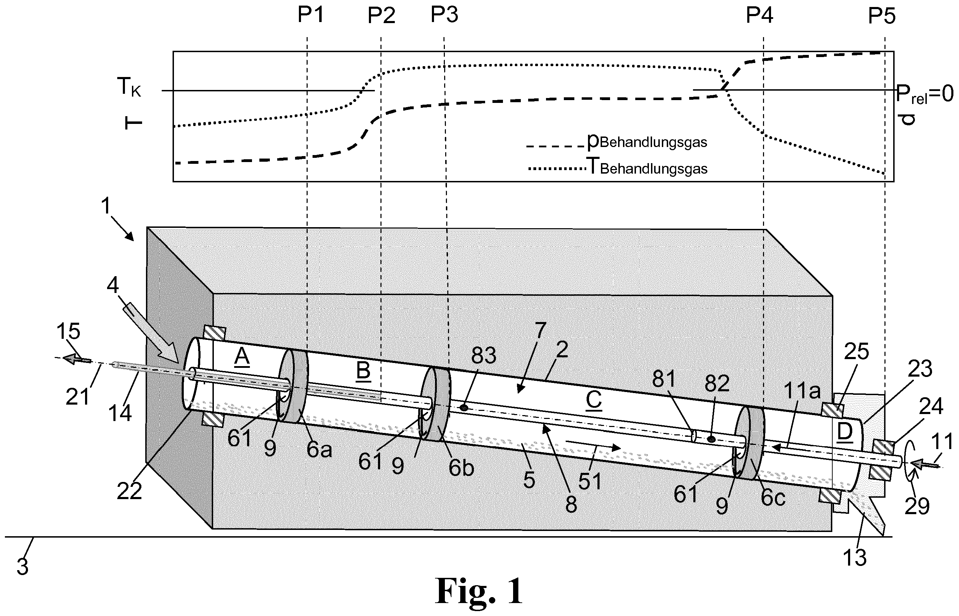

Der in **Figur 1** schematisch dargestellte Drehrohrofen 1 umfasst ein Drehrohr 2 aus Quarzglas, das um eine zur Horizontalen 3 leicht schräg verlaufende Rotationsachse 21 (Neigungswinkel etwa 4 Grad) rotierbar ist. Dem oberen Drehrohr-Ende 22 (Körnungseinlassseite) wird über eine mit einem Blockpfeil 4 angedeutete Einfüllvorrichtung eine im Drehrohrofen 1 zu behandelnde SiO₂-Körnung 5 zugeführt. Der Richtungspfeil 51 zeigt die Bewegungsrichtung der SiO₂-Körnung 5 im Laufe der Behandlung bis zum unteren Drehrohrende 23, das über Rollenlager 25 aus dem Gehäuse des Drehrohrofens 1 herausgeführt ist, und in eine Materialentnahmevorrichtung 13 für die behandelte SiO₂-Körnung mündet.

Die Innenbohrung des Drehrohres 2 bildet einen Behandlungsraum 7, der mittels Quarzglasscheiben 6a, 6b, 6c in vier Kammern unterteilt ist, nämlich in eine Materialeinlaufkammer A, eine Vorheizkammer B, eine Reaktionskammer C, und in eine Abkühl- oder Desorptionskammer D. Die Quarzglasscheiben 6a, 6b, 6c sind an der Innenwand des Drehrohres 2 angeschweißt und haben jeweils eine zur Drehrohr-Längsachse konzentrische Durchgangsbohrung, durch die ein Gasführungsrohr 8 aus Quarzglas geführt ist.

Das Gasführungsrohr 8 dient der Zufuhr von frischem Behandlungsgas in den Behandlungsraum 7 und der Ausleitung von verbrauchtem Behandlungsgas (Abgas) aus dem Behandlungsraum 7. Es erstreckt sich durch alle Kammern A-D des Behandlungsraums 7. Im Behandlungsraum 7 ist die Wandung des Gasführungsrohres 8 ist mit mehreren Wandungsöffnungen versehen, unterteilt in eine Gasauslassöffnung 82, durch die das Behandlungsgas 11 dem Gasverteilerrohr 8 in die Kammer C austritt, und eine Gaseinlassöffnung 83, über die verbrauchtes Behandlungsgas aus der Behandlungskammer C in das Gasverteilerrohr 8 wieder eintritt. Zwischen der Gasauslassöffnung 82 und der Gaseinlassöffnung 83 ist das Gasverteilerrohr 8 verschlossen (Verschluss 81) Zur Verbesserung der Durchströmung der SiO₂-Körnung 5 mit frischen Behandlungsgas in der Behandlungskammer C befinden sind die Gasauslassöffnung 82 und die Gaseinlassöffnung 83 (anders als in der Figur 1 schematisch gezeigt) auf entgegengesetzten Umfangseiten des Gasführungsrohres 8.

Das Gasverteilerrohr 8 ist mit den Quarzglasscheiben 6 verbunden und wie diese um die Rotationsachse (Drehrohr-Längsachse 21) rotierbar. Die Gasverteilerrohr-Längsachse, die Drehrohr-Längsachse 21 und die Rotationsachse verlaufen koaxial.

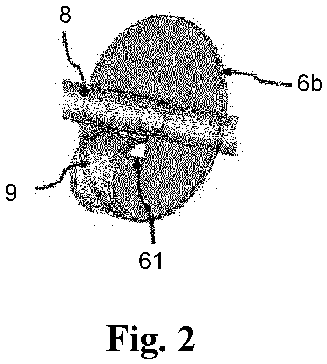

Auf ihrer der anfließenden SiO₂-Körnung 5 zugewandten Seite ist jede Quarzglasscheibe 6a, 6b, 6c mit einer Rohrhalbschale 9 verbunden. Diese ist in Figur 1 nur angedeutet und in Figur 2 besser zu erkennen. Ein freier Schenkel der Rohrhalbschale 9 endet an der Übergabeöffnung 61 und der andere nahe am Rand der Quarzglasscheibe 6a, 6b, 6c. Bei einer Drehrohr-Rotation in der anhand des Richtungspfeils 24 angeordneten Drehrichtung taucht der randständige Schenkel in die Schüttung der SiO₂-Körnung 5 ein und schaufelt bei weiterer Drehung die dabei mitgenommene SiO₂-Körnung 5 zur Übergabeöffnung 61, von wo sie in die in Transportrichtung 5a nachgeordnete Kammer B, C, D gelangt. Die Übergabeöffnungen 61 sind zu dem Zweck mit ovalem Querschnitt ausgeführt und verlaufen asymmetrisch zur Rotationsachse 21.

Am Außenmantel des Drehrohres 2 ist eine (in der Figur nicht dargestellte) Widerstandsheizeinrichtung vorgesehen. Die Quarzglasscheiben 6a und 6c befinden sich außerhalb des beheizten Längenabschnitts des Drehrohres 2; sie bestehen aus opakem, Wärmestrahlung reflektierendem Quarzglas.

Das untere Ende des Gasführungsrohres 8 besteht ebenfalls aus opakem, Wärmestrahlung reflektierendem Quarzglas. Es ist durch eine Drehdurchführung 24 aus dem Drehrohrofen 1 herausgeführt und an eine Leitung für die Zufuhr des Behandlungsgases angeschlossen (angezeigt durch den Blockpfeil 11). Das in das Gasverteilerrohr 8 eingespeiste Behandlungsgas 11 strömt in Gegenrichtung 11a zur Körnungs-Transportrichtung 51 durch den Behandlungsraum 7.

An seinem oberen Ende wird verbrauchtes Behandlungsgas aus dem Gasverteilerrohr 8 abgesaugt. Zu diesem Zwecke ragt ein Absaugrohr 14 in das obere Ende des Gasverteilerrohres 8 hinein. Der Blockpfeil 15 zeigt den Anschluss des Absaugrohres 14 an eine Absaugung an. Das Absaugrohr 14 rotiert nicht und hat keinen oder allenfalls leichten mechanischen Kontakt mit der Innenwandung des Gasverteilerrohres 8. Das in das Gasverteilerrohr 8 hineinragende Ende des Absaugrohres 14 endet an einer Position P2 im Behandlungsraum B, an der das abgesaugte und verbrauchte Behandlungsgas eine Temperatur hat, die höher ist als die Kondensationstemperatur (T_{K}) der Verunreinigungen im Behandlungsgas.

Die Herstellung des Drehrohres 2 mitsamt den Einbauten umfasst die folgenden Verfahrensschritte:
- Bereitstellen eines Drehrohres 2 aus Quarzglas mit einer Länge von 2500 mm und einem Innendurchmesser von 210 mm.
- Bereitstellung lasergeschnittenen kreisrunden Scheiben 6a und 6c aus opakem Quarzglas mit einer Scheibendicke von 5 mm und einem Außendurchmesser von 208 mm. Diese Scheiben 6a, 6c haben jeweils zwei Öffnungen: eine kreisrunde konzentrische Durchgangsbohrung zur Durchleitung des Gasverteilerrohres 8 und eine ovale außermittig angeordneten Übergabeöffnung 61 für die SiO₂-Körnung. Bereitstellung einer lasergeschnittenen kreisrunden Scheibe 6b aus transparentem Quarzglas mit denselben Abmessungen wie die Scheiben 6a, 6c.
- Bereitstellen eines Gasverteilerrohres 8 aus transparentem Quarzglas mit einem Außendurchmesser von 40 mm und einem Innendurchmesser von 32 mm. Stirnseitiges Anschweißen eines Rohrendstücks aus opakem Quarzglas mit einer Länge von 50 mm unter Bildung des Gasverteilerrohres 8 mit einer Gesamtlänge von 2700 mm.
- Herstellung der Schaufeln 9 durch Segmentierung von Quarzglasrohren und Anschweißen der Schaufeln 9 an die Quarzglasscheiben 6a, 6b, 6c.
- Laserschneiden von Gaseinlass- und Gasauslassöffnungen (82; 83) in die Wandung des Gasverteilerrohres 8 und Anbringen eines Pfropfens 83 zum Verschließen der Gasverteilerrohr-Innenbohrung zwischen den Gaseinlass- und Gasauslassöffnungen (82; 83).
- Anschweißen der Quarzglasscheiben 6a, 6b, 6c in der Innenbohrung des Gasverteilerrohres 8 auf einer Glasdrehbank.
- Verbinden des Gasverteilerrohres 8 mit den Durchgangsbohrungen der Quarzglasscheiben 6a, 6b, 6c und Einsetzen dieses Verbundes in die Innenbohrung des Drehrohrs 2 und Verschweißen der Quarzglasscheiben mit der Drehrohr-Innenwandung durch lokales Erhitzen unter Verringerung des Durchmessers der Drehrohr-Innenbohrung auf der Glasdrehbank.

Im Folgenden wird ein Ausführungsbeispiel für das erfindungsgemäße Behandlungsverfahren anhand der in den Figuren 1 und 2 schematisch dargestellten Vorrichtung näher beschrieben: Dem um seine Rotationsachse 21 mit 8 U/min rotierenden Drehrohr 2 wird mit einer Zufuhrrate von 8 kg/h kontinuierlich zu reinigende amorphe SiO₂-Körnung 5 zugeführt. Das Drehrohr 2 ist in Längsrichtung im spezifischen Schüttwinkel der SiO₂-Körnung 5 geneigt, so sich über seine Länge eine etwa gleichmäßige Dicke der Körnung-Schüttung 5 einstellt, die kontinuierlich vom Körnungseinlass 22 zum Körnungsauslass 23 bewegt wird.

Mittels der Widerstandsheizeinrichtung wird der Drehrohrofen 1 im Bereich der Reaktionskammer C auf eine Maximaltemperatur um 1200 °C erhitzt. In das um die Rotationsachse 21 rotierende und über die Drehdurchführung 9 aus dem Drehrohrofen 1 herausragende Ende des Gasverteilerrohres 8 wird ein reaktives Behandlungsgas 11 in Form eines Gasgemischs aus HCl, Chlor und Stickstoff mit einem Volumenstrom von 200l/h eingeleitet.

Das im Gegenstrom zur SiO₂-Körnung strömende Behandlungsgas 11 erwärmt sich schnell, verteilt sich insbesondere in die Behandlungszonen C und B und wird am oberen Ende als verbrauchtes Behandlungsgas 11 aus dem Gasverteilerrohr 8 mittels des Absaugrohres 14 abgesaugt.

Figur 1 zeigt oberhalb des Drehrohrofens 1 ein Diagramm mit einem typischen Temperatur (T)- und Druckverlauf (p) des Behandlungsgases 11. Die Position P2 repräsentiert die Stelle, an der das heiße Abgas (verbrauchtes Behandlungsgas) mittels des Absaugrohres 14 aus dem Gasverteilerrohr 8 entfernt wird. Hier findet eine Vermischung von heißem Abgas und Fremdluft statt, die über das Absaugrohr 14 von außen durch das Gasführungsrohr 8 eingesaugt wird. Dadurch ergibt sich ein Sprung sowohl im Temperaturverlauf (T) als auch im Druckverlauf (p) für das Behandlungsgas. Die Position P1 zeigt den Anfang der Vorwärmkammer B und die Position der vorderen Quarzglasscheibe 6a aus reflektierendem Quarzglas an. Die Position P3 entspricht dem Anfang der Reaktionskammer C und die Position P4 dem Ende der der Reaktionskammer C und der Position der hinteren Quarzglasscheibe 6c aus reflektierendem Quarzglas an. Die Position P5 entspricht dem Körnungsauslass. Es ist erkennbar, dass in der Gasphase über die gesamte Länge des Drehrohres 2 ein Druckgradient anliegt, der einen Gastransport zur Absaug-Position P2 bewirkt. An der Position Pᵣₑₗ=0 hat das Behandlungsgas einen Gasdruck der dem außen anliegenden Druck (Atmosphärendruck) entspricht.
- Die Einleitung des Behandlungsgases über das per Drehdurchführung 29 abgedichtete, rotierende Gasführungsrohr 8 bewirkt eine geringe Fremdluftzufuhr in den Behandlungsraum 7 und trägt zu einer höheren Konzentration des reaktiven Behandlungsgases 11 in der heißen Zone bei. Hierdurch ergibt sich ein besseres Reinigungsergebnis, bei gleichzeitiger Einsparung von reaktivem Behandlungsgas und geringerer Entsorgungskosten.
- Durch die Absaugung des noch heißen Behandlungsgases 11 in der Position P2 hat dieses eine hohe Konzentration gelöster Fremdstoffe, die damit in der Gasphase aus dem Behandlungsraum entfernt werden. Durch das Absaugen des Abgases an der Position P2 mit einer Temperatur oberhalb des Kondensationspunktes T_{K} werden außerdem Kondensationen an kälteren Stellen und Ablagerungen im Behandlungsraum 7 vermieden.
- Das nicht innerhalb des Drehrohrofens rotierende Absaugrohr 14 wird durch von außen eingesaugte Fremdluft gekühlt, was die Gefahr einer thermischen Verformung verringert.
- Durch eine Umkehrung der Drehrichtung 24 wird der Weitertransport der SiO₂-Körnung gestoppt, so dass ein Batchbetrieb realisiert werden kann, bei dem eine besonders intensive Reinigung zu Lasten des Durchsatzes möglich ist.
- Die Ausführung der randständigen Quarzglasscheiben 6a und 6c aus opakem Material reduziert die stirnseitige Abstrahlung des Drehrohrofens und ermöglicht eine bessere Abdichtung des rotierenden Drehrohres 2 und des rotierenden Gasverteilerrohres 8 durch den Einsatz von dichten Drehdurchführungen.

## Patentansprüche

1. Verfahren zur Behandlung rieselfähiger, anorganischer Körnung (5) in einem beheizten, um eine Rotationsachse (21) rotierenden Drehrohr (2), das einen Behandlungsraum (7) umgibt, der mittels Trennelementen (6a; 6b; 6c) in mehrere Behandlungszonen (A; B; C; D), davon mindestens eine Reaktionszone (C), unterteilt ist, wobei die Körnung (5) an einer Körnungseinlassseite (22) dem Behandlungsraum (7) zugeführt und in einer Körnungs-Transportrichtung (51) zu einer Körnungsauslassseite (23) transportiert und dabei einem Behandlungsgas (11) ausgesetzt wird, **dadurch gekennzeichnet, dass** verbrauchtes Behandlungsgas (11) aus der Reaktionszone (C) mittels eines um seine Längsachse rotierenden Gasverteilerrohres (8) abgesaugt wird.

2. Verfahren nach Anspruch 1, **dadurch gekennzeichnet, dass** das verbrauchte Behandlungsgas (11) aus dem Gasverteilerrohr (8) mittels eines rotatorisch feststehenden Absaugrohres (14) abgesaugt wird.

3. Verfahren nach Anspruch 2, **dadurch gekennzeichnet**, ein in das Gasverteilerrohr (8) hineinragendes Absaugrohr (14) eingesetzt wird.

4. Verfahren nach einem oder mehreren der vorhergehenden Ansprüche, **dadurch gekennzeichnet, dass** das Behandlungsgas (11) an der Körnungsauslassseite (23) in das Gasverteilerrohr (8) eingeleitet wird und entgegen der Körnungs-Transportrichtung (51) von einer Kammer (A; B; C; D) zur nächsten Kammer geleitet wird, und durch mindestens eine Gasauslassöffnung (82) aus dem Gasverteilerrohr (8) in die Reaktionszone (C) austritt, und verbrauchtes Behandlungsgas (11) durch mindestens eine Gaseinlassöffnung (83) aus der Reaktionszone (C) in das Gasverteilerrohr (8) wieder eintritt.

5. Verfahren nach Anspruch 4, **dadurch gekennzeichnet, dass** das Gasverteilerrohr (8) zwischen der vorderen (82) und der hinteren Wandungsöffnung (83) mindestens teilweise verschlossen ist (81).

6. Verfahren nach einem oder mehreren der vorhergehenden Ansprüche, **dadurch gekennzeichnet, dass** das Gasverteilerrohr (8) mit mindestens einem Trennelement (6a; 6b; 6c) drehfest verbunden ist, und dass die Trennelemente (6a; 6b; 6c) zum Durchlass von Körnung (5) von einer Zone (A; B; C; D) zur nächsten Zone jeweils eine Übergabeöffnung (61) aufweisen.

7. Verfahren nach Anspruch 6, **dadurch gekennzeichnet, dass** die Trennelemente (6a; 6b; 6c) mit einem Körnungs-Mitnehmer (9) ausgestattet sind, der infolge der Drehrohr-Rotation (29) in die Körnung (5) eintaucht und dabei mitgenommene Körnung zur Übergabeöffnung (61) verfrachtet.

8. Verfahren nach Anspruch 6 oder 7, **dadurch gekennzeichnet, dass** in Körnungs-Transportrichtung (51) gesehen der Körnungseinlassseite (22) ein vorderes Trennelement (6a) nachgeordnet ist und der Körnungsauslassseite (23) ein hinteres Trennelement (6c) vorgeordnet ist, und dass das vordere Trennelement (6a) und/oder das hintere Trennelement (6c) aus opakem Quarzglas ausgeführt sind, wobei das Drehrohr (2) vorzugsweise nicht beheizte stirnseitige Endabschnitte aufweist, und dass das vordere Trennelement (6a) und das hintere Trennelement (6c) jeweils in einem nicht beheizten stirnseitigen Endabschnitt angeordnet sind.

9. Verfahren nach einem oder mehreren der vorhergehenden Ansprüche, **dadurch gekennzeichnet, dass** das Gasverteilerrohr (8) einen an der Körnungsauslassseite (23) aus dem Drehrohr (2) herausragenden Längenabschnitt aufweist, und dass mindestens dieser Längenabschnitt aus opakem Quarzglas ausgeführt ist.

10. Drehrohr (2) zur Behandlung rieselfähiger, anorganischer Körnung (5), das um eine zur Horizontalen (3) geneigte Rotationsachse (21) rotierbar ist, und das einen Behandlungsraum (7) zur Aufnahme der Körnung (5) umgibt, der mittels Trennelementen (6a; 6b; 6c) in mehrere Behandlungszonen (A; B; C; D), davon mindestens eine Reaktionszone (C), unterteilt ist, und der eine Körnungseinlassseite (22) zum Einführen der Körnung (5) in den Behandlungsraum (7) und eine Körnungsauslassseite (23) zum Austragen der Körnung (5) aus dem Behandlungsraum (7) sowie einen Gaseinlass zum Einleiten eines Behandlungsgases (11) in die Reaktionszone (C) und einen Gasauslass zur Ausleitung von verbrauchtem Behandlungsgas (11) aus dem Behandlungsraum (7) ausweist, **dadurch gekennzeichnet, dass** der Gasauslass ein um seine Längsachse rotierendes Gasverteilerrohr (8) umfasst.

11. Drehrohr nach Anspruch 10, **dadurch gekennzeichnet, dass** der Gasauslass ein Absaugrohr (14) umfasst, das in das Gasverteilerrohr (8) hineinragt oder ohne direkten Kontakt an das Gasverteilerrohr (8) anschließt.

12. Drehrohr nach Anspruch 10 oder 11, **dadurch gekennzeichnet, dass** das Gasverteilerrohr (8) eine Rohr-Längsachse aufweist, die koaxial zur Drehrohr-Rotationsachse (21) verläuft.

13. Drehrohr nach einem oder mehreren der Ansprüche 10 bis 12, **dadurch gekennzeichnet, dass** der Gaseinlass an einem Gaseinlassende des Gasverteilerrohres (8) vorgesehen ist, der am Körnungsauslassende (23) des Drehrohres (2) liegt.

14. Drehrohr nach einem oder mehreren der Ansprüche 10 bis 13, **dadurch gekennzeichnet, dass** das Gasverteilerrohr (8) mit mindestens einem Trennelement (6a; 6b; 6c) drehfest verbunden ist, und dass die Trennelemente (6a; 6b; 6c) zum Durchlass von Körnung (5) jeweils eine Übergabeöffnung (61) aufweisen, durch die hindurch sich das Gasverteilerrohr (8) erstreckt, und dass die Trennelemente (6a; 6b; 6c) mit einem Körnungs-Mitnehmer (9) ausgestattet sind, der dazu ausgelegt ist, infolge der Drehrohr-Rotation (24) in die Körnung (5) einzutauchen und dabei mitgenommene Körnung zur Übergabeöffnung (61) zu verfrachten.

15. Drehrohr nach Anspruch13 oder 14, **dadurch gekennzeichnet, dass** in Körnungs-Transportrichtung (51) gesehen der Körnungseinlassseite (22) ein vorderes Trennelement (6a) nachgeordnet ist und der Körnungsauslassseite (23) ein hinteres Trennelement (6b) vorgeordnet ist, und dass das vordere Trennelement (6a) und/oder das hintere Trennelement (6b) aus opakem Quarzglas ausgeführt sind, wobei vorzugsweise das Drehrohr (2) nicht beheizte stirnseitige Endabschnitte aufweist, und dass das vordere Trennelement (6a) und das hintere Trennelement (6b) jeweils in einem nicht beheizten stirnseitigen Endabschnitt angeordnet sind.

## Claims

1. A method for treating free-flowing, inorganic granules (5) in a heated rotary pipe (2) that rotates about an axis of rotation (21) and surrounds a treatment chamber (7) that is divided into a plurality of treatment zones (A; B; C; D) by means of separating elements (6a; 6b; 6c), the plurality of treatment zones including at least one reaction zone (C), wherein the granules (5) are supplied to the treatment chamber (7) at a granule inlet side (22), and transported in a granule transport direction (51) to a granule outlet side (23), and in the process are exposed to a treatment gas (11), **characterized in that** spent treatment gas (11) is suctioned out of the reaction zone (C) by means of a gas distribution pipe (8) which rotates about the longitudinal axis thereof.

2. The method according to claim 1, **characterized in that** the spent treatment gas (11) is suctioned out of the gas distribution pipe (8) by means of a rotationally fixed suction pipe (14).

3. The method according to claim 2, **characterized in that** use is made of a suction pipe (14) which protrudes into the gas distribution pipe (8).

4. The method according to one or more of the preceding claims, **characterized in that** the treatment gas (11) is introduced into the gas distribution pipe (8) at the granule outlet side (23) and is guided from one chamber (A; B; C; D) to the next chamber counter to the granule transport direction (51), and emerges from the gas distribution pipe (8) into the reaction zone (C) through at least one gas outlet opening (82), and spent treatment gas (11) enters into the gas distribution pipe (8) again from the reaction zone (C) through at least one gas inlet opening (83).

5. The method according to claim 4, **characterized in that** the gas distribution pipe (8) is at least partially closed (81) between the front (82) and the rear wall opening (83).

6. The method according to one or more of the preceding claims, **characterized in that** the gas distribution pipe (8) is non-rotatably connected to at least one separating element (6a; 6b; 6c), and **in that** the separating elements (6a; 6b; 6c) each have a discharge opening (61) for the passage of granules (5) from one zone (A; B; C; D) to the next zone.

7. The method according to claim 6, **characterized in that** the separating elements (6a; 6b; 6c) are equipped with a granule carrier (9) which, as a result of the rotation (29) of the rotary pipe, dips into the granules (5) and conveys granules entrained thereby to the discharge opening (61).

8. The method according to claim 6 or 7, **characterized in that**, viewed in the granule transport direction (51), a front separating element (6a) is arranged downstream of the granule inlet side (22) and a rear separating element (6c) is arranged upstream of the granule outlet side (23), and **in that** the front separating element (6a) and/or the rear separating element (6c) are made of opaque quartz glass, wherein the rotary pipe (2) has preferably unheated end face portions, and **in that** the front separating element (6a) and the rear separating element (6c) are each arranged in an unheated end face portion.

9. The method according to one or more of the preceding claims, **characterized in that** the gas distribution pipe (8) has a longitudinal portion protruding out of the rotary pipe (2) at the granule outlet side (23), and **in that** at least this longitudinal portion is made of opaque quartz glass.

10. A rotary pipe (2) for treating free-flowing, inorganic granules (5), that can be rotated about an axis of rotation (21) inclined relative to the horizontal (3), and that surrounds a treatment chamber (7) for receiving the granules (5) that is divided into a plurality of treatment zones (A; B; C; D) by means of separating elements (6a; 6b; 6c), the plurality of treatment zones including at least one reaction zone (C), and that has a granule inlet side (22) for introducing the granules (5) into the treatment chamber (7) and a granule outlet side (23) for discharging the granules (5) from the treatment chamber (7), and also a gas inlet for introducing a treatment gas (11) into the reaction zone (C) and a gas outlet for discharging spent treatment gas (11) from the treatment chamber (7), **characterized in that** the gas outlet comprises a gas distribution pipe (8) which rotates about the longitudinal axis thereof.

11. The rotary pipe according to claim 10, **characterized in that** the gas outlet comprises a suction pipe (14) that protrudes into the gas distribution pipe (8) or is linked to the gas distribution pipe (8) without direct contact.

12. The rotary pipe according to claim 10 or 11, **characterized in that** the gas distribution pipe (8) has a pipe longitudinal axis which runs coaxially with the rotary pipe axis of rotation (21).

13. The rotary pipe according to one or more of claims 10 to 12, **characterized in that** the gas inlet is provided at a gas inlet end of the gas distribution pipe (8), which gas inlet end is provided at the granule outlet end (23) of the rotary pipe (2).

14. The rotary pipe according to one or more of claims 10 to 13, **characterized in that** the gas distribution pipe (8) is non-rotatably connected to at least one separating element (6a; 6b; 6c), **and in that** the separating elements (6a; 6b; 6c) each have a discharge opening (61) for the passage of granules (5), through which the gas distribution pipe (8) extends, **and in that** the separating elements (6a; 6b; 6c) are equipped with a granule carrier (9) which is designed, as a result of the rotation (24) of the rotary pipe, to dip into the granules (5) and convey granules entrained thereby to the discharge opening (61).

15. The rotary pipe according to claim 13 or 14, **characterized in that,** viewed in the granule transport direction (51), a front separating element (6a) is arranged downstream of the granule inlet side (22) and a rear separating element (6b) is arranged upstream of the granule outlet side (23), **and in that** the front separating element (6a) and/or the rear separating element (6b) are made of opaque quartz glass, wherein preferably the rotary pipe (2) has unheated end face portions, **and in that** the front separating element (6a) and the rear separating element (6b) are each arranged in an unheated end face portion.

## Revendications

1. Procédé de traitement du grain inorganique pouvant s'écouler (5) dans un tube rotatif (2) chauffé tournant autour d'un axe de rotation (21), lequel tube entoure une chambre de traitement (7), laquelle est divisée au moyen d'éléments de séparation (6a; 6b; 6c) en plusieurs zones de traitement (A; B; C; D), dont au moins une zone de réaction (C), le grain (5) étant introduit au niveau d'un côté d'entrée de grain (22) dans la chambre de traitement (7) et transporté dans un dispositif de transport de grain (51) vers un côté de sortie de grain (23) et ce faisant soumis à un gaz de traitement (11), **caractérisé en ce que** le gaz de traitement (11) usé est aspiré hors de la zone de réaction (C) au moyen d'un tube de distribution de gaz (8) tournant autour de son axe longitudinal.

2. Procédé selon la revendication 1, **caractérisé en ce que** le gaz de traitement (11) usé est aspiré hors du tube de distribution de gaz (8) au moyen d'un tube d'aspiration (14) fixe en rotation.

3. Procédé selon la revendication 2, **caractérisé en ce qu'**un tube d'aspiration (14) pénétrant dans le tube de distribution de gaz (8) est utilisé.

4. Procédé selon l'une ou plusieurs des revendications précédentes, **caractérisé en ce que** le gaz de traitement (11) est introduit dans le tube de distribution de gaz (8) par le côté de sortie de grain (23) et guidé contre le sens de transport du grain (51) d'une chambre (A; B; C; D) vers la chambre suivante et sort à travers au moins une ouverture de sortie de gaz (82) du tube de distribution de gaz (8) dans la zone de réaction (C) et le gaz de traitement (11) usé entre de nouveau dans le tube de distribution de gaz (8) à partir de la zone de réaction (C) à travers au moins une ouverture d'entrée de gaz (83).

5. Procédé selon la revendication 4, **caractérisé en ce que** le tube de distribution de gaz (8) est au moins partiellement fermé (81) entre l'ouverture de paroi avant (82) et l'ouverture de paroi arrière (83).

6. Procédé selon l'une ou plusieurs des revendications précédentes, **caractérisé en ce que** le tube de distribution de gaz (8) est relié solidairement en rotation à au moins un élément de séparation (6a; 6b; 6c) et **en ce que** les éléments de séparation (6a; 6b; 6c) présentent respectivement une ouverture de transfert (61) pour le passage du grain (5) d'une zone (A; B; C; D) à la zone suivante.

7. Procédé selon la revendication 6, **caractérisé en ce que** les éléments de séparation (6a; 6b; 6c) sont munis d'un entraîneur de grain (9), lequel plonge dans le grain (5) suite à la rotation (29) du tube rotatif et envoie ce faisant du grain entraîné vers l'ouverture de transfert (61).

8. Procédé selon la revendication 6 ou 7, **caractérisé en ce que**, vu dans le sens de transport de grain (51), un élément de séparation avant (6a) est disposé en aval du côté d'entrée de grain (22) et un élément de séparation arrière (6c) est disposé en amont du côté de sortie de grain (23) et **en ce que** l'élément de séparation avant (6a) et/ou l'élément de séparation arrière (6c) sont réalisés en verre de quartz opaque, le tube rotatif (2) présentant de préférence des sections d'extrémité frontales non chauffées, et **en ce que** l'élément de séparation avant (6a) et l'élément de séparation arrière (6c) sont disposés respectivement dans une section d'extrémité frontale non chauffée.

9. Procédé selon l'une ou plusieurs des revendications précédentes, **caractérisé en ce que** le tube de distribution de gaz (8) présente une section longitudinale faisant saillie du tube rotatif (2) du côté de sortie de grain (23) et **en ce qu'**au moins cette section longitudinale est réalisée en verre de quartz opaque.

10. Tube rotatif (2) de traitement du grain coulant inorganique (5), lequel tube peut tourner autour d'un axe de rotation (21) incliné par rapport à l'horizontale (3) et lequel tube entoure une chambre de traitement (7) destinée à recevoir le grain (5), laquelle est divisée au moyen d'éléments de séparation (6a; 6b; 6c) en plusieurs zones de traitement (A; B; C; D), dont au moins une zone de réaction (C), et laquelle présente un côté d'entrée de grain (22) pour l'introduction du grain (5) dans la chambre de traitement (7) et un côté de sortie de grain (23) pour l'évacuation du grain (5) de la chambre de traitement (7), ainsi qu'une entrée de gaz pour l'introduction d'un gaz de traitement (11) dans la zone de réaction (C) et une sortie de gaz pour l'évacuation du gaz de traitement (11) usé de la chambre de traitement (7), **caractérisé en ce que** la sortie de gaz comprend un tube de distribution de gaz (8) tournant autour de son axe longitudinal.

11. Tube rotatif selon la revendication 10, **caractérisé en ce que** la sortie de gaz comprend un tube d'aspiration (14), qui pénètre dans le tube de distribution de gaz (8) ou qui se relie sans contact direct au tube de distribution de gaz (8).

12. Tube rotatif selon la revendication 10 ou 11, **caractérisé en ce que** le tube de distribution de gaz (8) présente un axe longitudinal de tube, lequel axe est coaxial à l'axe de rotation (21) de tube rotatif.

13. Tube rotatif selon l'une ou plusieurs des revendications 10 à 12, **caractérisé en ce que** l'entrée de gaz est prévue à une extrémité d'entrée de gaz du tube de distribution de gaz (8), laquelle se situe à l'extrémité de sortie de grain (23) du tube rotatif (2).

14. Tube rotatif selon l'une ou plusieurs des revendications 10 à 13, **caractérisé en ce que** le tube de distribution de gaz (8) est relié solidairement en rotation à au moins un élément de séparation (6a; 6b; 6c) et **en ce que** les éléments de séparation (6a; 6b; 6c) présentent respectivement une ouverture de transfert (61) pour le passage du grain (5) à travers laquelle s'étend le tube de distribution de gaz (8) et **en ce que** les éléments de séparation (6a; 6b; 6c) sont munis d'un entraîneur de grain (9), lequel est conçu pour plonger dans le grain (5) suite à la rotation du tube rotatif (24) et envoyer ce faisant du grain entraîné vers l'ouverture de transfert (61).

15. Tube rotatif selon la revendication 13 ou 14, **caractérisé en ce que**, vu dans le sens de transport de grain (51), un élément de séparation avant (6a) est disposé en aval du côté d'entrée de grain (22) et un élément de séparation arrière (6b) est disposé en amont du côté de sortie de grain (23) et **en ce que** l'élément de séparation avant (6a) et/ou l'élément de séparation arrière (6b) sont réalisés en verre de quartz opaque, le tube rotatif (2) présentant de préférence des sections d'extrémité frontales non chauffées et **en ce que** l'élément de séparation avant (6a) et l'élément de séparation arrière (6b) sont disposés respectivement dans une section d'extrémité frontale non chauffée.
